# EUROPEAN PATENT SPECIFICATION

(11) **EP 2 068 039 B1**
(45) Date of publication and mention of the grant of the patent: **09.02.2011**
(21) Application number: 07023522.1
(22) Date of filing: 05.12.2007
(51) Int. Cl.: F16H 3/08, F16H 57/02

(54) **Gearbox for a motor vehicle**
Getriebe für ein Kraftfahrzeug
Boîte de vitesse de véhicule à moteur

(43) Date of publication of application: 10.06.2009
(73) Proprietor: GM Global Technology Operations, Inc., Detroit, MI 48265-3000 (US)
(72) Inventor: Remmler, Mathias, 67294 Mauchenheim (DE); Mohlin, Mikael, 442 33 Kungälv (SE)
(74) Representative: Strauss, Peter

(56) References cited:
- EP-A- 0 540 989
- EP-A- 1 479 941
- JP-A- 3 074 656

## Description

The present invention relates to a gearbox for a motor vehicle comprising at least one input shaft carrying a plurality of drive gearwheels and three layshafts, as disclosed e.g. in EP 0 540 989 A1 showing the features of the preamble of claim 1.

In this prior art gearbox, there are five driven gearwheels on the input shafts, two of which mesh with one driven gearwheel on the first or second layshaft, respectively, two mesh with two gearwheels on both the first and second layshafts, giving six forward gears, and the fifth drive gearwheel is exclusively dedicated to the reverse gear, which is obtained by having a single gearwheel of the third layshaft meshing with the fifth drive gearwheel and a gearwheel of the first layshaft. The number of drive gearwheels on the input shaft and the space required between some of these for synchronizers on the first and second layshafts determine the minimum length the shafts must have and, hence, the overall length of the gearbox. Although it is theoretically conceivable to form six forward gears using only three drive wheels, each of which meshes with two driven gearwheels on first and second layshafts, such a solution may be impractical because transmission gear ratios desired for the different gears cannot be achieved due to geometrical constraints.

The object of the present invention is, therefore, to provide a new gearbox layout by which a high number of gears can be accommodated in a short gearbox without geometrical constraints imposing impractical limitations on the transmission ratios of the various gears.

This object is achieved by a gearbox for a motor vehicle comprising at least one input shaft carrying a plurality of drive gearwheels and three layshafts, wherein a first gearwheel on said input shaft meshes with a second gearwheel on the first one of said layshafts, which is adapted to establish a first gear transmission ratio between the input shaft and said first layshaft by being locked to said first layshaft, characterized in that the second gearwheel is rigidly coupled to a third gearwheel on said first layshaft, that said third gearwheel and a fourth gearwheel on said first layshaft are coupled via the third layshaft, and that a fifth gearwheel on said input shaft and a sixth gearwheel on the second layshaft meshing with said fifth gearwheel are located in the same plane as said third gearwheel. The invention is based on the idea of using the third layshaft not only for a reverse gear, but also for establishing an arbitrary transmission ratio between the second and fourth gearwheels of the first layshaft. In the plane of the third gearwheel, there is space available on the input shaft and the second layshaft for placing meshing fifth and sixth gearwheels, so that these can establish a further gear ratio without increasing the axial length of the gearbox.

Preferably, neither of the fifth or sixth gearwheels meshes with the third gearwheel. Therefore the diameter of the third gearwheel imposes no strict constraints on the diameter of the fifth gearwheel and vice versa.

Preferably, the first gear involves torque transmission from the input shaft to the first layshaft via the second and third gearwheels and the third layshaft. The use of the third layshaft for driving the fourth gearwheel involves additional frictional losses, which can be most easily tolerated in the first gear.

A seventh gearwheel on said input shaft and an eighth gearwheel on the second layshaft meshing with said seventh gearwheel may be located in the same plane as said fourth gearwheel, so as to establish a further gear without increasing the length of the gearbox.

Neither of said seventh and eighth gearwheels should mesh with said fourth gearwheel.

On the third layshaft, rigidly coupled ninth and tenth gearwheels may be provided, which differ in diameter and which mesh with said third and fourth gearwheels.

For establishing a reverse gear, the third layshaft may carry a pinion and a synchronizer for locking said ninth and tenth gearwheels to said pinion.

Preferably, said first and second layshafts also carry a pinion, and all three pinions mesh with a same output gearwheel, e.g. of a differential.

Preferably, the input shaft comprises coaxially mounted hollow and solid input shafts. These input shafts can be driven independently from one another by a motor using a double clutch. By transferring motor torque from one of these input shafts to the other, it is possible to switch gears without interrupting torque transmission through the gearbox.

According to a first preferred embodiment the first and fifth gearwheels are both mounted on said solid shaft.

In a second preferred embodiment, the first and fifth gearwheels are both mounted on said hollow shaft.

In a particularly preferred compact design, said first gearwheel is mounted on said hollow shaft and said fifth gearwheel is mounted on said solid shaft.

In either case, the seventh gearwheel is preferably mounted on the hollow shaft, close to the motor and the pinion(s).

Locking means may be provided for selectively locking together said solid and hollow input shafts. In this way, a clutch associated to the hollow shaft and a clutch associated to the solid shaft can both be used simultaneously for starting the vehicle. In this way, the load on either clutch is kept low, so that the clutch discs can be small and compact.

The locking means preferably comprise locking pins which are axially displaceable between a position in which they engage holes of gearwheels on the hollow input shaft and the solid input shaft and a position in which they engage holes of at least one gearwheel on one of said hollow and solid input shafts only.

Driven gearwheels on the second layshaft are preferably associated to topmost gears of the gearbox. Since these gears tend to be smaller than those associated to lower gears, the width of the gearbox casing can be reduced in the vicinity of the second layshaft.

Placing the driven gearwheels of the topmost gears on a same layshaft further allows to make the distance between the input shaft and the second layshaft smaller than between the input shaft and the first layshaft: By making the latter large, large gearwheels can be used for the low gears, reducing contact wear between the gearwheels of the low gears. This does not imply the use of unnecessarily large driven gearwheels for the high gears, since these are all located on the second layshaft.

Further, by choosing different diameters for the above-mentioned pinions on the first and second layshafts, the spread between gear ratios of low gears on the first layshaft and high gears on the second can be adjusted as needed. Preferably, the pinion of the first layshaft is smaller than that of the second.

Further features and advantages of the invention will become apparent from the subsequent description of embodiments thereof referring to the appended drawings.
- Fig. 1: is a schematic diagram of an elementary embodiment of a gearbox according to the present invention;
- Fig. 2: is a schematic diagram of a first embodiment of a gearbox having hollow and solid input shafts;
- Fig. 3: is a second embodiment of a gearbox having hollow and solid input shafts;
- Fig. 4: is a modified version of the gearbox of Fig. 3, in which the number of gears is increased by one without increasing the overall length of the gearbox; and
- Fig. 5: is a schematic diagram of a third embodiment of a gearbox having hollow and solid input shafts.

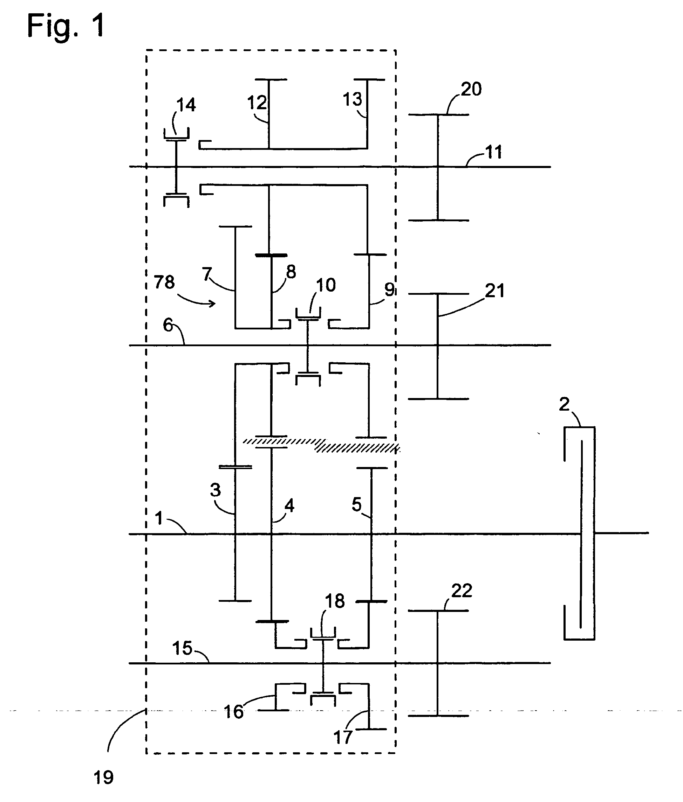

Fig. 1 illustrates a first embodiment of a gearbox according to the present invention. In this elementary embodiment, there is a single input shaft 1 driven by a motor, not shown, via a clutch 2. Drive gearwheels 3, 4, 5 of various diameters are fixed on input shaft 1. A first layshaft 6 carries gearwheels 7, 8, 9. The gearwheels 7, 8 are rigidly coupled to each other, forming what will be referred to in the following as a gearwheel block 78. In the configuration shown, gearwheel block 78 and gearwheel 9 are freely rotatable around layshaft 6. A synchronizer 10 is displaceable to the left or right in order to lock either gearwheel block 78 or gearwheel 9 to layshaft 6.

Gearwheels 3 and 7 mesh, gearwheels 8 and 4, although being located in the same plane, do not. Instead, gearwheel 8 engages a gearwheel 12 which is rotatably mounted on a further layshaft 11. It is rigidly coupled to a further gearwheel 13, which, in turn, meshes with gearwheel 9. A synchronizer 14 is provided for selectively locking the two gearwheels 12, 13 to layshaft 11.

Another layshaft 15 carries rotatable gearwheels 16, 17 and, in between, a synchronizer 18 for selectively locking one or none of gearwheels 16, 17 to layshaft 15. The gearwheels 16, 17 mesh with gearwheels 4, 5 of input shaft 1, respectively.

Outside a gearbox casing 19, each of the three layshafts 6, 11, 15 carries a pinion 20, 21, 22. All three pinions 20, 21, 22 engage a same gearwheel, e.g. of an output differential, not shown.

In a first gear of the gearbox of Fig. 1, synchronizer 10 locks gearwheel 9 to layshaft 6. Torque is transmitted from input shaft 1 via gearwheels 3, 7, 8, 12, 13, 9 to layshaft 6.

In a second gear, synchronizer 10 locks gearwheels 7, 8 to layshaft 6, and torque is transmitted to layshaft 6 by gearwheels 3, 7 alone.

In a third gear, synchronizer 10 is disengaged, and synchronizer 18 locks gearwheel 17 to layshaft 15, so that torque is transmitted by gearwheels 5, 17 to layshaft 15.

A fourth gear is formed by a shifting synchronizer 18 to the left, so that gearwheel 16 is locked and torque is transmitted to layshaft 15 by gearwheels 4 and 16.

The distance between input shaft 1 and first layshaft 6 is wider than between input shaft 1 and second layshaft 15. By adjusting this distance ratio, any desired relation between the gear ratios of first and second gear, on the one hand, and third to fourth gears, on the other, can be established.

Further gears, which may be intermediate to the ones mentioned above, can be obtained by adding more gearwheels, as shown in the following embodiments. In these, components which correspond to ones already mentioned with respect to Fig. 1 have three-digit reference numerals, the last two digits of which are identical to the reference numerals of Fig. 1.

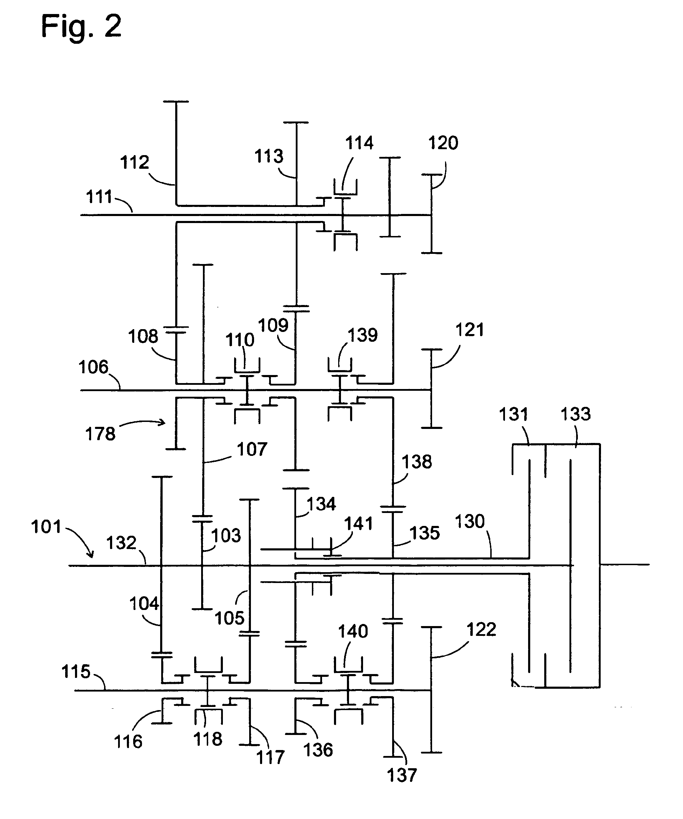

In Fig. 2, the input shaft 101 is in two parts, a hollow shaft 130, driven by a clutch 131, and a solid shaft 132, driven by a clutch 133. The solid shaft 132 carries drive gearwheel 103, which meshes with gearwheel 107 of layshaft 106. Gearwheel 107 is rigidly coupled to gearwheel 108, which, in turn, meshes with gearwheel 112 of layshaft 111. The latter is coupled to gearwheel 113 and drives gearwheel 109 of layshaft 106.

Hollow input shaft 130 carries gearwheels 134, 135. Gearwheel 134 is in a same plane as gearwheels 113, 109 of layshafts 111, 106, but does not mesh with these, but with a gearwheel 136 on layshaft 115. Gearwheel 135 meshes with gearwheels 137, 138 on layshafts 115, 106.

For establishing a first gear, synchronizer 110 locks gearwheel 109. Torque is transmitted from solid shaft 132 via gearwheels 103, 107, 108, 112, 113, 109 to layshaft 106.

In the second gear a synchronizer 139 locks gearwheel 138 to layshaft 106, so that torque is transmitted from hollow shaft 130 via gearwheels 135, 138 to layshaft 106.

In the third gear, synchronizer 139 is unlocked, and synchronizer 110 locks gearwheel 107 to layshaft 106, as in the second gear of the Fig. 1 embodiment.

In the fourth gear, synchronizer 110 is unlocked, and a synchronizer 140 locks gearwheel 137 to layshaft 115, causing torque to be transmitted from hollow input shaft 130 via gearwheels 135, 137 to layshaft 115.

In the fifth gear, synchronizer 140 is unlocked, and synchronizer 118 locks gearwheel 117 to layshaft 115, causing torque to be transmitted from solid input shaft 132 to layshaft 115 via gearwheels 105, 117.

In the sixth gear, synchronizer 118 is unlocked, and synchronizer 140 locks gearwheel 136. Torque is transmitted from hollow shaft 130 via gearwheels 134, 136 to layshaft 115.

In the seventh gear, synchronizer 140 is unlocked, and synchronizer 118 locks gearwheel 116 to layshaft 115. Torque is transmitted from solid input shaft 132 to layshaft 115 via gearwheels 104, 116.

Since in this embodiment small driven gearwheels 116, 117, 136, 137 associated with the high gears 4 to 7 are all mounted on lower layshaft 115, the width of the gearbox casing can be reduced in the vicinity of layshaft 115.

As in the first embodiment, the distance between input shaft 101 and first layshaft 106 is wider than between input shaft 101 and second layshaft 115. For adjusting the spread between high and low gears, pinions 121, 122 may have different diameters. By making pinion 122 larger than pinion 121, as shown, a large spread between the gears can be established without having to recur to excessively large or small gearwheels on the layshafts 106, 115.

Between gearwheels 134, 135, the hollow input shaft 130 carries a dogring 141, dogs of which are permanently engaged in holes of gearwheel 134. Upon start-up of the gearbox, by rotating shafts 130, 132 with respect to each other, these dogs can be placed in front of matching openings, not shown, in gearwheel 105. By axially displacing the dogring 141, the dogs are brought to engage the openings of gearwheel 105, locking the shafts 130, 132 rigidly to each other. In this situation, the two clutches 131, 133 can be operated simultaneously to start moving the vehicle.

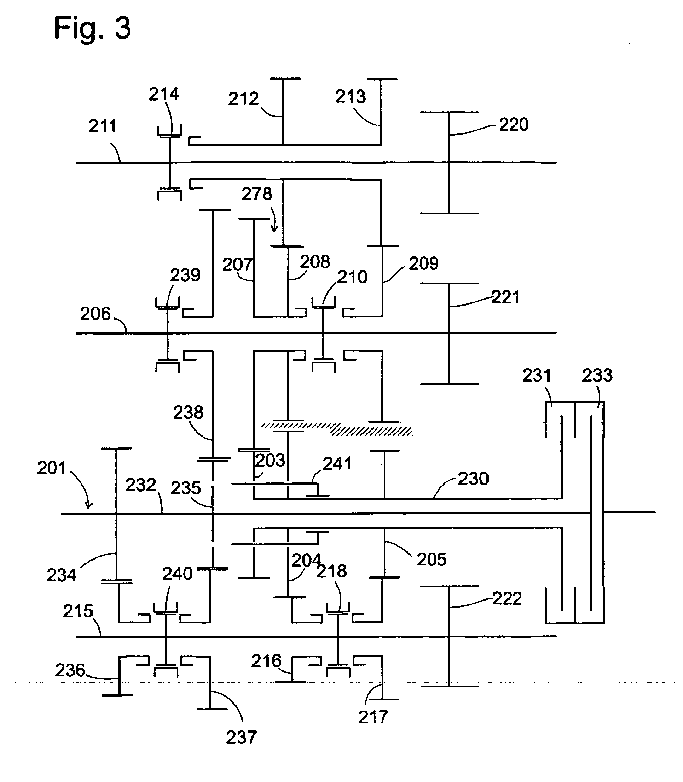

In the embodiment of Fig. 3, gearwheel 203 engaging gearwheel 207 of layshaft 206 is mounted on hollow shaft 230. In principle, it can be said that, in general, the roles of hollow and solid input shafts are reversed between the embodiments of Fig. 2 and 3. Whereas in the embodiment of Fig. 2, odd-numbered gears are established using drive gearwheels of solid input shaft 132, and even-numbered gears were established using drive gearwheels of the hollow input shaft 113, the hollow input shaft 230 is used for odd-numbered gears, and solid input shaft 232 for even-numbered gears in Fig. 3. In detail, the first gear uses gearwheels 203, 207, 208, 212, 213, 209 and synchronizer 210 for driving layshaft 206, the second gear uses gearwheels 235, 238 and synchronizer 239, the third gear uses gearwheels 203, 207 and synchronizer 210, the fourth gear uses gearwheels 235, 237 and synchronizer 240, the fifth gear uses gearwheels 205, 217 and synchronizer 218, the sixth gear uses gearwheels 234, 236 and synchronizer 240, and the seventh gear uses gearwheels 204, 216 and synchronizer 218.

The gist of this embodiment is in that since the first gear has no drive gearwheel on the input shaft exclusively dedicated to it, gearwheel 235 dedicated to the second gear is the smallest drive gearwheel. By placing it on the solid input shaft 232, diameters of all drive gearwheels can be made smaller than in the embodiment of Fig. 2.

In this embodiment, too, a dogring 241 may be provided for locking together the input shafts 230, 232. Since gearwheels 203, 204 are mounted directly adjacent to each other near the end of hollow input shaft 230, dogs of dogring 241 permanently extend through holes of both, and are inserted in holes of gearwheel 235 in order to lock input shafts 230, 232 to each other.

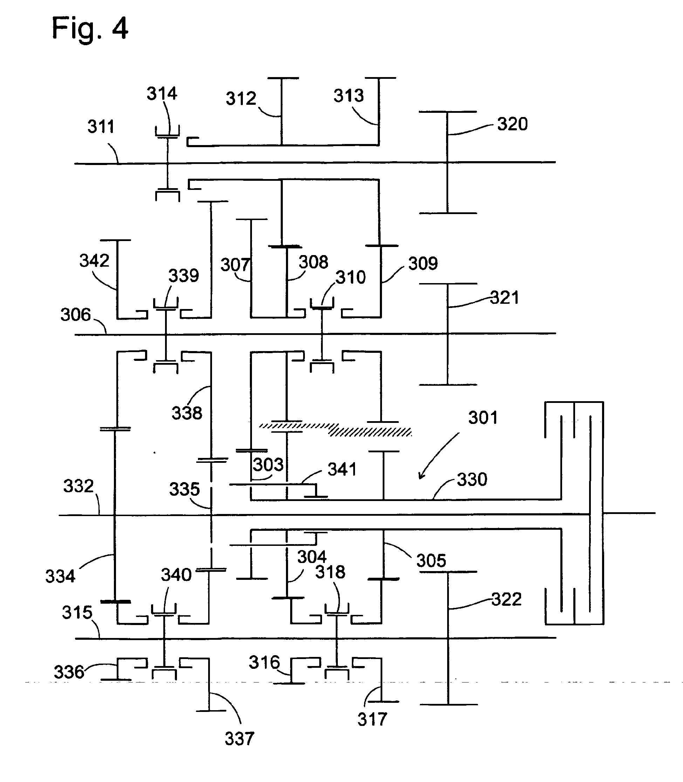

Fig. 4 illustrates how the gearbox of Fig. 3 can be extended to eight gears without increasing its length. Gearwheel 334 is slightly larger than 234, gearwheel 336 is slightly smaller than 236, so that gearwheels 334, 336 cooperate to form an eighth gear, whereas the sixth gear is obtained by an additional gearwheel 342, which is mounted on layshaft 306 and meshes with drive gearwheel 334.

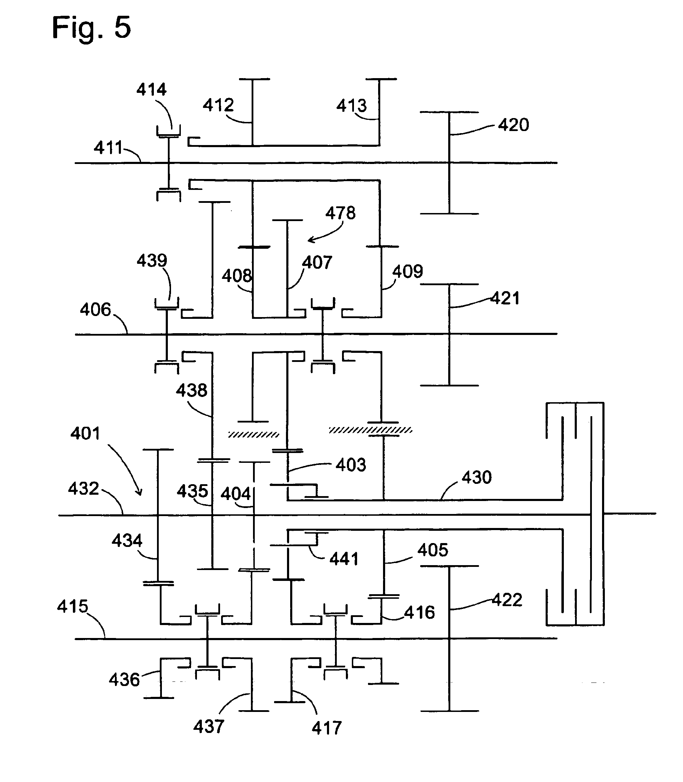

As can be seen from the above, a gearbox having seven or eight gears can be designed according to the invention, the length of which corresponds to five gearwheels, e.g. 336, 337, 303, 316, 317 and two synchronizers, e.g. 340, 318. Fig. 5 illustrates an embodiment in which the length of the gearbox is reduced still further by one gearwheel. In this embodiment, the gearwheel block 478 on layshaft 406 has gearwheels 407, 408, of which gearwheel 407 meshes with gearwheel 403 mounted on hollow input shaft 430, whereas the other gearwheel 408 extends in a same plane as drive gearwheel 404 mounted on solid input shaft 432.

The torque flow in the various gears of the gearbox of Fig. 5 is as follows:
first gear: hollow shaft 430, gearwheels 403, 407, 408, 412, 413, 409, layshaft 406,
second gear: input shaft 432, gearwheels 435, 438, layshaft 406,
third gear: input shaft 430, gearwheels 403, 407, layshaft 406,
fourth gear: input shaft 432, gearwheels 404, 437, layshaft 415,
fifth gear: input shaft 430, gearwheels 403, 417, layshaft 415,
sixth gear: input shaft 432, gearwheels 434, 436, layshaft 415,
seventh gear: input shaft 430, gearwheels 405, 416, layshaft 415.

Also here, the casing can be made narrow around layshaft 415, since it carries only gearwheels of the highest gears.

In analogy to the embodiment of Fig. 4, an eight-gear gearbox may be formed by adding a further gearwheel on layshaft 406 which meshes with drive gearwheel 434.

### List of reference signs

| | | | |
|---|---|---|---|
| 1. | input shaft | 78. | gearwheel block |
| 2. | clutch | 101. | input shaft |
| 3. | drive gearwheel | 102. | clutch |
| 4. | drive gearwheel | 103. | drive gearwheel |
| 5. | drive gearwheel | 104. | drive gearwheel |
| 6. | 1st layshaft | 105. | drive gearwheel |
| 7. | gearwheel | 106. | 1st layshaft |
| 8. | gearwheel | 107. | gearwheel |
| 9. | gearwheel | 108. | gearwheel |
| 10. | synchronizer | 109. | gearwheel |
| 11. | 3d layshaft | 110. | synchronizer |
| 12. | gearwheel | 111. | ... |
| 13. | gearwheel | | |
| 14. | synchronizer | | |
| 15. | layshaft | | |
| 16. | gearwheel | | |
| 17. | gearwheel | | |
| 18. | synchronizer | | |
| 19. | casing | | |
| 20. | pinion | | |
| 21. | pinion | | |
| 22. | pinion | | |
| 30. | hollow shaft | | |
| 31. | clutch | | |
| 32. | solid shaft | | |
| 33. | clutch | | |
| 34. | gearwheel | | |
| 35. | gearwheel | | |
| 36. | gearwheel | | |
| 37. | gearwheel | | |
| 38. | gearwheel | | |
| 39. | synchronizer | | |
| 40. | synchronizer | | |
| 41. | dogring | | |

## Claims

1. A gearbox for a motor vehicle comprising at least one input shaft (1; 101; 132; 201; 230; 301; 330; 430) carrying a plurality of drive gearwheels (3, 4, 5; 103, 104, 105, 134, 135; 103, 104, 105; 203, 204, 205, 234, 235; 203, 204, 205; 303, 304, 305, 334, 335; 303, 304, 305; 403, 405) and three layshafts (6, 11, 15; 106, 111, 115; 206, 211, 215; 306, 311, 315; 406, 411, 415), wherein a first gearwheel (3; 103; 203; 303; 403) on said input shaft meshes with a second gearwheel (7; 107; 207; 307; 407) on a first one (6; 106; 206; 306; 406) of said layshafts, which is adapted to establish a first gear transmission ratio between the input shaft and said first layshaft by being locked to said first layshaft, **characterized in that** the second gearwheel (7; 107; 207; 307; 407) is rigidly coupled to a third gearwheel (8; 108; 208; 308; 408) on said first layshaft, that said third gearwheel and a fourth gearwheel (9; 109; 209; 309; 409) on said first layshaft are coupled via the third layshaft (11; 111; 211; 311; 411), and that a fifth gearwheel (4; 104; 204; 304; 404) on said input shaft and a sixth gearwheel (16; 116; 216; 316; 437) on the second layshaft (15; 115; 215; 315; 415) meshing with said fifth gearwheel (4, 104, 204, 304, 404) are located in a same plane as said third gearwheel.

2. The gearbox of claim 1, wherein the first gear involves torque transmission from the input shaft (1; 101; 132; 201; 230; 301; 330; 430) to the first layshaft (6; 106; 206; 306; 406) via the second and third gearwheels (7,8; 107, 108; 207, 208; 307, 308; 407, 408) and the third layshaft (11; 111; 211; 311; 411).

3. The gearbox of claim 1 or 2, wherein neither of said fifth and sixth gearwheels (4, 16; 104, 116; 204, 216; 304, 316; 404, 437) meshes with said third gearwheel (8; 108; 208; 308; 408).

4. The gearbox of claim 1, 2 or 3, wherein a seventh gearwheel (5; 134; 205; 305; 405) on said input shaft (1; 101; 201; 230; 301; 330; 430) and an eighth gearwheel (18; 136; 217; 317; 416) on the second layshaft (15; 115; 215; 315; 415) meshing with said seventh gearwheel are located in a same plane as said fourth gearwheel (9; 109; 209; 309; 409).

5. The gearbox of claim 4, wherein neither of said seventh and eighth gearwheels meshes with said fourth gearwheel.

6. The gearbox of any of the preceding claims, wherein the third layshaft (11; 111; 211; 311; 411) carries rigidly coupled ninth and tenth gearwheels (12, 13; 112, 113; 212, 213; 312, 313; 412; 413) which differ in diameter and which mesh with said third and fourth gearwheels.

7. The gearbox of claim 6, wherein the third layshaft (11; 111; 211; 311; 411) carries a pinion (20; 120; 20;320; 420) and a synchronizer (14, 114; 214; 314; 414) for locking said ninth and tenth gearwheels to the pinion (20; 120; 20;320; 420).

8. The gearbox of any of the preceding claims, wherein said first and second layshafts (6, 15; 106, 115; 206, 215; 306, 315; 406, 415) each carries a pinion (21, 22; 121, 122; 221; 222; 321, 322; 421, 422), and said two pinions mesh with a same output gearwheel.

9. The gearbox of claims 7 and 8, wherein the pinion (20; 120; 20;320; 420) of said third layshaft (11; 111; 211; 311; 411) meshes with said output gearwheel.

10. The gearbox of any of the preceding claims, wherein the input shaft (101; 201; 301; 401) comprises coaxially mounted hollow and solid input shafts (130, 132; 230, 232; 330, 332; 430, 432).

11. The gearbox of claim 10, wherein said first (103) and fifth gearwheels (104) are mounted on said solid shaft (132).

12. The gearbox of claim 10, wherein said first (203; 303) and fifth gearwheels (204; 304) are mounted on said hollow shaft (230; 330).

13. The gearbox of claim 10, wherein said first gearwheel (403) is mounted on said hollow shaft (430), and said fifth gearwheel (404) is mounted on said solid shaft (432).

14. The gearbox of claim 4 and any of claims 10 to 13, wherein said seventh gearwheel (134; 205; 305; 405) is mounted on said hollow shaft (130; 230; 330; 340).

15. The gearbox of any of the preceding claims, wherein driven gearwheels (16, 17; 116, 117, 136, 137; 216, 217, 236, 237; 316, 317, 336, 337; 416, 417, 436, 437) on the second layshaft (15; 115; 215; 315; 415) are associated to topmost gears of the gearbox.

16. The gearbox of claim 15 and claim 8 or 9, wherein the pinion (21; 121; 221; 321; 421) of the first layshaft (6; 106; 206; 306; 406) is larger than the pinion (22; 122; 222; 322; 422) of the second layshaft (15; 115; 215; 315; 415).

17. The gearbox of claim 15 or 16, wherein the distance between the input shaft (1; 101; 132; 201; 230; 301; 330; 430) and the first layshaft (6; 106; 206; 306; 406) is larger than between the input shaft (1; 101; 132; 201; 230; 301; 330; 430) and the second layshaft (15; 115; 215; 315; 415).

18. The gearbox of any of the preceding claims, comprising locking means (141; 241; 341; 441) for selectively locking together said solid and hollow input shafts.

19. The gearbox of claim 18, wherein said locking means (141; 241; 341; 441) comprise locking pins which are axially displaceable between a position in which they engage holes of gearwheels (134, 105; 203, 204, 235; 303, 304, 335; 403, 404) on the hollow input shaft and the solid input shaft and a position in which they engage holes of at least one gearwheel on one of said hollow and solid input shafts.

## Patentansprüche

1. Getriebe für ein Kraftfahrzeug, das mindestens eine Eingangswelle (1; 101; 132; 201; 230; 301; 330; 430) mit einer Mehrzahl von Antriebszahnrädern (3, 4, 5; 103, 104, 105, 134, 135; 103, 104, 105; 203, 204, 205, 234, 235; 203, 204, 205; 303, 304, 305, 334, 335; 303, 304, 305; 403, 405) und drei Vorgelegewellen (6, 11, 15; 106, 111, 115; 206, 211, 215; 306, 311, 315; 406, 411, 415) umfasst, wobei ein erstes Zahnrad (3; 103; 203; 303; 403) auf der Eingangswelle in ein zweites Zahnrad (7; 107; 207; 307; 407) auf einer ersten (6; 106; 206; 306; 406) der Vorgelegewellen eingreift, das dazu ausgeführt ist, ein erstes Übersetzungsverhältnis zwischen der Eingangswelle und der ersten Vorgelegewelle einzurichten, indem es mit der ersten Vorgelegewelle verriegelt ist, **dadurch gekennzeichnet, dass** das zweite Zahnrad (7; 107; 207; 307; 407) fest mit einem dritten Zahnrad (8; 108; 208; 308; 408) auf der ersten Vorgelegewelle gekoppelt ist, dass das dritte Zahnrad und ein viertes Zahnrad (9; 109; 209; 309; 409) auf der ersten Vorgelegewelle über die dritte Vorgelegewelle (11; 111; 211; 311; 411) gekoppelt sind, und dass ein fünftes Zahnrad (4; 104; 204; 304; 404) auf der Eingangswelle und ein sechstes Zahnrad (16; 116; 216; 316; 437) auf der zweiten Vorgelegewelle (15; 115; 215; 315; 415), das in das fünfte Zahnrad (4, 104, 204, 304, 404) eingreift, in der selben Ebene wie das dritte Zahnrad angeordnet sind.

2. Getriebe gemäß Anspruch 1, wobei das erste Zahnrad die Drehmomentübertragung von der Eingangswelle (1; 101; 132; 201; 230; 301; 330; 430) zu der ersten Vorgelegewelle (6; 106; 206; 306; 406) über das zweite und dritte Zahnrad (7, 8; 107, 108; 207, 208; 307, 308; 407, 408) und die dritte Vorgelegewelle (11; 111; 211; 311; 411) umfasst.

3. Getriebe gemäß Anspruch 1 oder 2, wobei weder das fünfte noch das sechste Zahnrad (4, 16; 104, 116; 204, 216; 304, 316; 404, 437) in das dritte Zahnrad (8; 108; 208; 308; 408) eingreift.

4. Getriebe gemäß Anspruch 1, 2 oder 3, wobei ein siebentes Zahnrad (5; 134; 205; 305; 405) auf der Eingangswelle (1; 101; 201; 230; 301; 330; 430) und ein achtes Zahnrad (18; 136; 217; 317; 416) auf der zweiten Vorgelegewelle (15; 115; 215; 315; 415), das in das siebente Zahnrad eingreift, auf einer selben Ebene wie das vierte Zahnrad (9; 109; 209; 309; 409) angeordnet sind.

5. Getriebe gemäß Anspruch 4, wobei weder das siebente noch das achte Zahnrad in das vierte Zahnrad eingreift.

6. Getriebe gemäß einem der vorangehenden Ansprüche, wobei die dritte Vorgelegewelle (11; 111; 211; 311; 411) starr gekoppelte neunte und zehnte Zahnräder (12, 13; 112, 113; 212, 213; 312, 313; 412; 413) trägt, die sich im Durchmesser unterscheiden und in das dritte und vierte Zahnrad eingreifen.

7. Getriebe gemäß Anspruch 6, wobei die dritte Vorgelegewelle (11; 111; 211; 311; 411) ein Ritzel (20; 120; 20; 320; 420) und eine Synchroneinrichtung (14, 114; 214; 314; 414) zum Verriegeln des neunten und zehnten Zahnrads mit dem Ritzel (20; 120; 20; 320; 420) trägt.

8. Getriebe gemäß einem der vorangehenden Ansprüche, wobei die erste und zweite Vorgelegewelle (6, 15; 106, 115; 206, 215; 306, 315; 406, 415) jeweils ein Ritzel (21, 22; 121, 122; 221; 222; 321, 322; 421, 422) tragen und die zwei Ritzel jeweils in ein identisches Abtriebzahnrad eingreifen.

9. Getriebe gemäß Anspruch 7 und 8, wobei das Ritzel (20; 120; 20;320; 420) der dritten Vorgelegewelle (11; 111; 211; 311; 411) in das Abtriebzahnrad eingreift.

10. Getriebe gemäß einem der vorangehenden Ansprüche, wobei die Eingangswelle (101; 201; 301; 401) koaxial montierte hohle und massive Eingangswellen (130, 132; 230, 232; 330, 332; 430, 432) aufweist.

11. Getriebe gemäß Anspruch 10, wobei das erste (103) und das fünfte Zahnrad (104) an der massiven Welle (132) montiert sind.

12. Getriebe gemäß Anspruch 10, wobei das erste (203; 303) und das fünfte Zahnrad (204; 304) an der hohlen Welle (230; 330) montiert sind.

13. Getriebe gemäß Anspruch 10, wobei das erste Zahnrad (403) an der hohlen Welle (430) montiert ist und das fünfte Zahnrad (404) an der massiven Welle (432) montiert ist.

14. Getriebe gemäß Anspruch 4 und einem der Ansprüche 10 bis 13, wobei das siebente Zahnrad (134; 205; 305; 405) an der hohlen Welle (130; 230; 330; 340) montiert ist.

15. Getriebe gemäß einem der vorangehenden Ansprüche, wobei die angetriebenen Zahnräder (16, 17; 116, 117, 136, 137; 216, 217, 236, 237; 316, 317, 336, 337; 416, 417, 436, 437) auf der zweiten Vorgelegewelle (15; 115; 215; 315; 415) den obersten Zahnrädern des Getriebes zugeordnet sind.

16. Getriebe gemäß Anspruch 15 und Anspruch 8 oder 9, wobei das Ritzel (21; 121; 221; 321; 421) der ersten Vorgelegewelle (6; 106; 206; 306; 406) größer ist als das Ritzel (22; 122; 222; 322; 422) der zweiten Vorgelegewelle (15; 115; 215; 315; 415).

17. Getriebe gemäß Anspruch 15 oder 16, wobei der Abstand zwischen der Eingangswelle (1; 101; 132; 201; 230; 301; 330; 430) und der ersten Vorgelegewelle (6; 106; 206; 306; 406) größer ist als jener zwischen der Eingangswelle (1; 101; 132; 201; 230; 301; 330; 430) und der zweiten Vorgelegewelle (15; 115; 215; 315; 415).

18. Getriebe gemäß einem der vorangehenden Ansprüche, das Verriegelungsmittel (141; 241; 341; 441) für die selektive Verriegelung der hohlen und der massiven Eingangswellen umfasst.

19. Getriebe gemäß Anspruch 18, wobei die Verriegelungsmittel (141; 241; 341; 441) Verriegelungsstifte umfassen, die axial versetzbar sind zwischen einer Position, in der sie in Löcher von Zahnrädern (134, 105; 203, 204, 235; 303, 304, 335; 403, 404) auf der hohlen Eingangswelle und der massiven Eingangswelle eingreifen, und einer Position, in der sie in Löcher mindestens eines Zahnrads auf einer der hohlen und massiven Eingangswellen eingreifen.

## Revendications

1. Boîte de vitesses pour un véhicule à moteur, comprenant au moins un arbre d'entrée (1 ; 101 ; 132 ; 201 ; 230 ; 301 ; 330 ; 430) portant une pluralité de roues dentées d'entraînement (3, 4, 5 ; 103, 104, 105, 134, 135 ; 103, 104, 105 ; 203, 204, 205, 234, 235 ; 203, 204, 205 ; 303, 304, 305, 334, 335 ; 303, 304, 305 ; 403, 405) et trois arbres intermédiaires (6, 11, 15 ; 106, 111, 115 ; 206, 211, 215 ; 306, 311, 315 ; 406, 411, 415), dans laquelle une première roue dentée (3 ; 103 ; 203 ; 303 ; 403) sur ledit arbre d'entrée engrène avec une deuxième roue dentée (7 ; 107 ; 207 ; 307 ; 407) sur un premier (6 ; 106 ; 206 ; 306 ; 406) desdits arbres intermédiaires qui est adapté pour établir un premier rapport de transmission entre l'arbre d'entrée et ledit premier arbre intermédiaire en se verrouillant sur ledit premier arbre intermédiaire, **caractérisée en ce que** la deuxième roue dentée (7 ; 107 ; 207 ; 307 ; 407) est couplée de manière rigide à une troisième roue dentée (8 ; 108 ; 208 ; 308 ; 408) sur ledit premier arbre intermédiaire, **en ce que** ladite troisième roue dentée et une quatrième roue dentée (9 ; 109 ; 209 ; 309 ; 409) sur ledit premier arbre intermédiaire sont couplées par l'intermédiaire du troisième arbre intermédiaire (11 ; 111 ; 211 ; 311 ; 411), et **en ce qu'**une cinquième roue dentée (4 ; 104 ; 204 ; 304 ; 404) sur ledit arbre d'entrée et une sixième roue dentée (16 ; 116 ; 216 ; 316 ; 437) sur le deuxième arbre intermédiaire (15 ; 115 ; 215 ; 315 ; 415) engrenant avec ladite cinquième roue dentée (4, 104, 204, 304, 404) sont situées dans un même plan que ladite troisième roue dentée.

2. Boîte de vitesses selon la revendication 1, dans laquelle le premier rapport implique la transmission du couple de l'arbre d'entrée (1 ; 101 ; 132 ; 201 ; 230 ; 301 ; 330 ; 430) au premier arbre intermédiaire (6 ; 106 ; 206 ; 306 ; 406) par l'intermédiaire des deuxième et troisième roues dentées (7, 8 ; 107, 108 ; 207, 208 ; 307, 308 ; 407, 408) et du troisième arbre intermédiaire (11 ; 111 ; 211 ; 311 ; 411).

3. Boîte de vitesses selon la revendication 1 ou 2, dans laquelle aucune desdites cinquième et sixième roues dentées (4, 16 ; 104, 116 ; 204, 216 ; 304, 316 ; 404, 437) n'engrène avec ladite troisième roue dentée (8 ; 108 ; 208 ; 308 ; 408).

4. Boîte de vitesses selon la revendication 1, 2 ou 3, dans laquelle une septième roue dentée (5 ; 134 ; 205 ; 305 ; 405) sur ledit arbre d'entrée (1 ; 101 ; 201 ; 230 ; 301 ; 330 ; 430) et une huitième roue dentée (18 ; 136 ; 217 ; 317 ; 416) sur le deuxième arbre intermédiaire (15 ; 115 ; 215 ; 315 ; 415) engrenant avec ladite septième roue dentée sont situées dans le même plan que ladite quatrième roue dentée (9 ; 109 ; 209 ; 309 ; 409).

5. Boîte de vitesses selon la revendication 4, dans laquelle aucune desdites septième et huitième roue dentées n'engrène avec ladite quatrième roue dentée.

6. Boîte de vitesses selon l'une quelconque des revendications précédentes, dans laquelle le troisième arbre intermédiaire (11 ; 111 ; 211 ; 311 ; 411) porte en couplage rigide une neuvième roue dentée et une dixième (12, 13 ; 112, 113 ; 212, 213 ; 312, 313 ; 412 ; 413) qui ont un diamètre différent et qui engrènent avec lesdites troisième et quatrième roues dentées.

7. Boîte de vitesses selon la revendication 6, dans laquelle le troisième arbre intermédiaire (11 ; 111 ; 211 ; 311 ; 411) porte un pignon (20 ; 120 ; 20 ;320 ; 420) et un synchroniseur (14, 114 ; 214 ; 314 ; 414) destiné à verrouiller lesdites neuvième et dixième roues dentées sur le pignon (20 ; 120 ; 20 ;320 ; 420).

8. Boîte de vitesses selon l'une quelconque des revendications précédentes, dans laquelle lesdits premier et deuxième arbres intermédiaires (6, 15 ; 106, 115 ; 206, 215 ; 306, 315 ; 406, 415) portent chacun un pignon (21, 22 ; 121, 122 ; 221 ; 222 ; 321, 322 ; 421, 422), et lesdits deux pignons engrènent avec une même roue dentée de sortie.

9. Boîte de vitesses selon les revendications 7 et 8, dans laquelle le pignon (20 ; 120 ; 20 ; 320 ; 420) dudit troisième arbre intermédiaire (11 ; 111 ; 211 ; 311 ; 411) engrène avec ladite roue dentée de sortie.

10. Boîte de vitesses selon l'une quelconque des revendications précédentes, dans laquelle l'arbre d'entrée (101 ; 201 ; 301 ; 401) comprend des arbres d'entrée (130, 132 ; 230, 232 ; 330, 332 ; 430, 432) creux et pleins montés de façon coaxiale.

11. Boîte de vitesses selon la revendication 10, dans laquelle lesdites première (103) et cinquième roues dentées (104) sont montées sur ledit arbre plein (132).

12. Boîte de vitesses selon la revendication 10, dans laquelle lesdites première (203 ; 303) et cinquième roues dentées (204 ; 304) sont montées sur ledit arbre creux (230 ; 330).

13. Boîte de vitesses selon la revendication 10, dans laquelle ladite première roue dentée (403) est montée sur ledit arbre creux (430), et ladite cinquième roue dentée (404) est montée sur ledit arbre plein (432).

14. Boîte de vitesses selon la revendication 4 et l'une quelconque des revendications 10 à 13, dans laquelle ladite septième roue dentée (134 ; 205 ; 305 ; 405) est montée sur ledit arbre creux (130 ; 230 ; 330 ; 340).

15. Boîte de vitesses selon l'une quelconque des revendications précédentes, dans laquelle des roues dentées entraînées (16, 17 ; 116, 117, 136, 137 ; 216, 217, 236, 237 ; 316, 317, 336, 337 ; 416, 417, 436, 437) sur le deuxième arbre intermédiaire (15 ; 115 ; 215 ; 315 ; 415) sont associées aux rapports supérieurs de la boîte de vitesses.

16. Boîte de vitesses selon la revendication 15 et la revendication 8 ou 9, dans laquelle le pignon (21 ; 121 ; 221 ; 321 ; 421) du premier arbre intermédiaire (6 ; 106 ; 206 ; 306 ; 406) est plus grand que le pignon (22 ; 122 ; 222 ; 322 ; 422) du deuxième arbre intermédiaire (15 ; 115 ; 215 ; 315 ; 415).

17. Boîte de vitesses selon la revendication 15 ou 16, dans laquelle la distance entre l'arbre d'entrée (1 ; 101 ; 132 ; 201 ; 230 ; 301 ; 330 ; 430) et le premier arbre intermédiaire (6 ; 106 ; 206 ; 306 ; 406) est plus grande qu'entre l'arbre d'entrée (1 ; 101 ; 132 ; 201 ; 230 ; 301 ; 330 ; 430) et le deuxième arbre intermédiaire (15 ; 115 ; 215 ; 315 ; 415).

18. Boîte de vitesses selon l'une quelconque des revendications précédentes, comprenant des moyens de verrouillage (141 ; 241 ; 341 ; 441) pour verrouiller sélectivement ensemble lesdits arbres d'entrée plein et creux.

19. Boîte de vitesses selon la revendication 18, dans laquelle lesdits moyens de verrouillage (141 ; 241 ; 341 ; 441) comprennent des goupilles de verrouillage qui peuvent être déplacées dans le sens axial entre une position dans laquelle elles se mettent en prise dans des trous des roues dentées (134, 105 ; 203, 204, 235 ; 303, 304, 335 ; 403, 404) sur l'arbre d'entrée creux et l'arbre d'entrée plein et une position dans laquelle elles se mettent en prise dans les trous d'au moins une roue dentée sur l'un desdits arbres d'entrée plein et creux.
